# EUROPEAN PATENT SPECIFICATION

(11) **EP 3 836 507 B1**
(45) Date of publication and mention of the grant of the patent: **20.12.2023**
(21) Application number: 19846249.1
(22) Date of filing: 06.08.2019
(51) Int. Cl.: H04L 9/32, G06F 9/451, H04L 67/08, H04L 67/306, H04L 67/10, H04L 67/145, H04L 69/40, H04L 9/40

(54) **CLIENT CONNECTION EMERGENCY MANAGEMENT METHOD, CLIENT AND COMPUTER READABLE STORAGE MEDIUM**
NOTFALLVERWALTUNGSVERFAHREN EINER CLIENT-VERBINDUNG, CLIENT UND COMPUTERLESBARES SPEICHERMEDIUM
PROCÉDÉ DE GESTION D'URGENCE DE CONNEXION DE CLIENT, CLIENT ET SUPPORT DE STOCKAGE LISIBLE PAR ORDINATEUR

(30) Priority: 06.08.2018 CN 201810889651
(43) Date of publication of application: 16.06.2021
(73) Proprietor: ZTE Corporation, Shenzhen, Guangdong 518057 (CN)
(72) Inventor: MIAO, Guihai, Shenzhen, Guangdong 518057 (CN)
(74) Representative: Aipex B.V.
(86) International application number: PCT/CN2019/099455
(87) International publication number: WO 2020/029961

(56) References cited:
- CN-A- 103 905 241
- CN-A- 105 245 606
- CN-A- 107 864 217
- CN-A- 107 979 467
- JP-A- 2002 222 171
- JP-A- 2009 238 122
- JP-A- 2015 072 661
- US-A1- 2016 112 497

## Description

### TECHNICAL FIELD

Embodiments of the present application relate to the field of cloud computing application technology, for example, an emergency management method for client connection, a client and a computer-readable storage medium.

### BACKGROUND

A cloud desktop is an application form of cloud computing. Cloud computing is a new resource utilization method on the Internet and performs on-demand computing to many users on the basis of heterogeneous and autonomous services on the Internet. Cloud computing resources are dynamic, easily scalable and virtualized. Cloud computing provides cloud resources and cloud services over the Internet. A cloud desktop is a cloud that fits the preceding concept of cloud computing, has three major characteristics of cloud computing: presented as a desktop service to a user, elastic management of resources, and provided over a network, and is a cloud service. That is, simply by being equipped with a simplified client device or any other network-accessible device and by use of a professional program or browser, can we access a personal desktop and various applications residing on a server. Moreover, the user experience of the cloud desktop is the same as the user experience of a personal computer (PC).

A cloud desktop forms a cloud platform that can provide desktop services externally in a manner that a personal computer environment is separated from a physical machine by use of a desktop environment and a cloud computing mode. Computing and storage resources required by a personal desktop environment are integrated into a central server to replace local computing and storage resources of a client. Computing and storage resources of the central server are also shared and scalable so that resources for different personal desktop environments are allocated and delivered on demand, thereby improving the resource utilization efficiency and reducing the total cost of ownership.

Each cloud desktop has both a management node and a computing node. The management node is generally responsible for scheduling a virtual desktop infrastructure (VDI) desktop system, for example, registering a new virtual desktop and directing a request of a virtual desktop to an available system. A user obtains an authorized desktop by authenticating the identity by interacting with a controller. In actual production activities, the management node may fail. For a cloud desktop in the related art, once a management node fails, even if a computing node is normal and the desktop virtual machine used by a user is normal, the desktop system used by the user cannot interact with the management node any more. As a result, the list attribute of the desktop of the user cannot be obtained, and the user cannot use the desktop virtual machine any more. Further relevant technologies are also known from JP 2002 222171 A which discloses in order to secure sufficient security without lowering operability, this system is provided with a log-in time monitoring means for invalidating log-in as log-in time-out when a condition where an application is not found under an operation continues for the first prescribed time, an application time monitoring means for conducting forced termination of the application when an input operation is not conducted for the second prescribed time or more with respect to the application under the operation, the first authentication means for authenticating a user by a user ID and a password when starting up the application in the log-in or after the invalidation of the log-in, and the second authentication means for authenticating the user by the password excepting the case of the log-in time-out, when the application is started up after the application is forcibly terminated by the application time monitoring means.

### SUMMARY

Embodiments of the present application provide an emergency management method for client connection, a client and a computer-readable storage medium according to the independent claims, solving the problem in which a user cannot use a desktop virtual machine when a management node fails in the related art. Further improvements and embodiments are provided in the dependent claims.

An embodiment of the present application provides an emergency management method for client connection. The method includes: in response to confirming that feedback about authentication information times out, starting emergency connection and authenticating a local password corresponding to a user identification (ID); after the authentication of the local password corresponding to the user ID succeeds, querying a locally stored user information file for desktop list information according to the user ID; and displaying the desktop list information and linking to a cloud desktop system by using a command line parameter in the user information file.

An embodiment of the present application provides a client. The client is configured to provide a user interface of a cloud desktop system. The client includes a processor, a memory and a data bus.

The data bus is configured to enable connection and communication between the processor and the memory.

The processor is configured to execute an emergency management program for client connection stored in the memory to perform the following operations: in response to confirming that feedback about authentication information times out, starting emergency connection and authenticating a local password corresponding to a user ID; after the authentication of the local password corresponding to the user ID succeeds, querying a locally stored user information file for desktop list information according to the user ID; and displaying the desktop list information, and linking to a cloud desktop system by using a command line parameter in the user information file.

An embodiment of the present application provides a computer-readable storage medium storing one or more programs. The one or more programs can be executed by one or more processors so that the preceding emergency management method for client connection can be performed.

### BRIEF DESCRIPTION OF DRAWINGS

FIG. 1 is a flowchart of an emergency management method for client connection according to an embodiment of the present application.
FIG. 2 is a block diagram illustrating the structure of a client according to an embodiment of the present application.
FIG. 3 is a block diagram illustrating the architecture of a cloud desktop system according to an embodiment of the present application.
FIG. 4 is a flowchart illustrating the emergency process of a cloud desktop system according to an embodiment of the present application.

### DETAILED DESCRIPTION

The embodiments described herein are intended to illustrate embodiments of the present application and not to limit embodiments of the present application.

A cloud desktop provides a solution for a user to replace a traditional PC by using the virtualization technology and the cloud desktop technology and using a thin terminal (simplified terminal) and a data center, thereby achieving security and flexibility in the use of a desktop. Desktop virtualization (or virtual desktop infrastructure) is a server-based computing model and borrows a traditional thin-client model so that an administrator and the user can obtain both the advantages of the server-based computing model and the advantages of the traditional thin-client model. All desktop virtual machines are hosted and uniformly managed in a data center. Also, the user can obtain the use experience of a complete PC. The user can obtain a user experience consistent with a traditional PC by use of a thin client or a similar device and by use of a local area network or remote access. Desktop virtualization is a technology that supports enterprise-level remote dynamic access to desktop systems and enterprise-level unified hosting of desktop systems in a data center. The user can access a mail system or a net disk in a network through any device whenever and wherever and can access a personal desktop system on a network through any device whenever and wherever. Because of so many advantages of the cloud desktop, enterprise users gradually replace a traditional PC with the cloud desktop. The cloud desktop is thus popularized and applied on a large scale.

Based on the preceding technical principles of the cloud desktop, some embodiments are set forth herein.

### Embodiment one

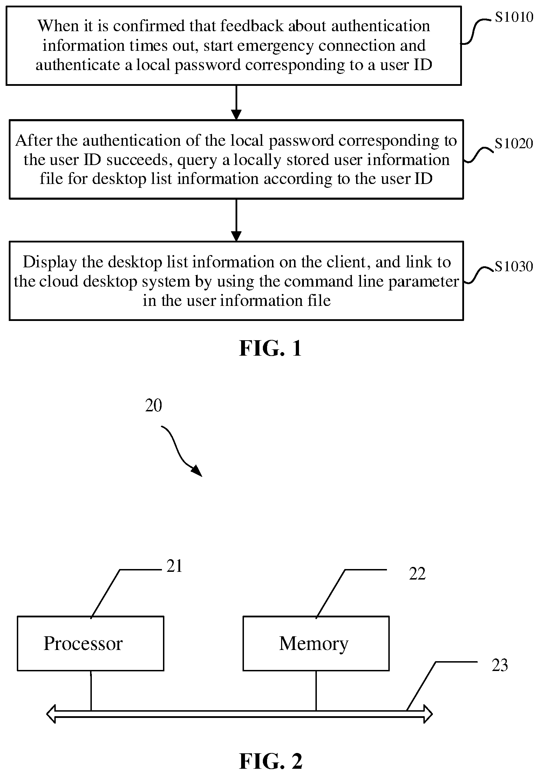

As shown in FIG. 1, an embodiment of the present application provides an emergency management method for client connection. The method includes the steps below.

In S1010, when it is confirmed that feedback about authentication information times out, emergency connection is started and a local password corresponding to a user identification (ID) is authenticated.

In an embodiment, the timeout of the feedback about the authentication information includes the following: No feedback about the authentication information is provided within a preset time; or feedback information about the authentication information is a login failure, an unavailable virtual state or a failure to link to a cloud desktop system.

In an embodiment, after network connection, a user preferably logs in to a client, enters the user ID and password through the client and registers the authentication account with the management node of a cloud desktop system. When no feedback information returned from the management node to the client is received within the preset time, the feedback is considered to time out, and the client starts an emergency connection process and performs local authentication on the user ID and password according to the locally stored user information file.

Alternatively, the management node returns feedback information to the client within the preset time, and the client receives the feedback information, that is, the management node responds, but the feedback information is an error code such as an unavailable virtual state, a failure to link to the cloud desktop system, an authentication failure or a failure to log in to the cloud desktop system. In short, the management node has no feedback within the preset time, or the feedback information is an error code; thus, the system authentication store management service (common SMS (CS)) is considered abnormal, the management node is considered down (unavailable), and the client starts the emergency process. In this case, the client first authenticates the local password corresponding to the user ID. To prevent user A from logging in to the virtual machine of user B in the case where multiple users share one client, if the management node is abnormal, the client needs to perform local authentication first when using a stored command line parameter to log in to a virtual desktop.

In S1020, after the authentication of the local password corresponding to the user ID succeeds, desktop list information is queried in a locally stored user information file according to the user ID.

The user information file user.dat of a user is stored on a client and contains information such as the user ID, the local password, a desktop universally unique identifier (UUID), a name and the command line parameter.

In S1030, the desktop list information is displayed on the client, and the cloud desktop system is linked by using the command line parameter in the user information file.

In this embodiment of the present application, the cloud desktop system is linked through authentication of the local user ID and password and through information such as the desktop list information and the command line parameter recorded in the user information file. In the case where the management node of the cloud desktop system is abnormal and the computing node is normal, the desktop virtual machine can be used normally so that the user does not need to care about the complexity of the cloud desktop system, the degree of customer satisfaction is improved, and the case where large-scale users cannot use the desktop virtual machine is avoided. Also, downtime is reduced, and the operation and maintenance quality of the application product is improved.

After querying the locally stored user information file for the desktop list information according to the user ID, the method further includes: in the case where multiple pieces of desktop list information are detected in the user information file, prompting to select and display one of the multiple pieces of desktop list information.

In the case where each client is provided with multiple pieces of desktop list information, the user selects a desktop and logs in to the desktop. In the case where one client is provided with one desktop list, the user automatically logs in to the virtual desktop. In the case of a crash of the management node, the online user can use the emergency process of the cloud desktop normally. In this manner, in a case where the management node fails, most users can log in to and use their own cloud desktops, thereby reducing the impact caused by the failure.

In an embodiment, before confirming that the feedback about the authentication information times out, the method further includes starting a client, setting a network environment and detecting the network environment by using a Transmission Control Protocol (TCP) link. In the set network environment window, the client determines whether the network is faulty through the TCP link. TCP is a transport layer protocol in the Internet. To establish a connection, TCP uses a three-way handshake. After sending a synchronize sequence numbers (SYN) connection request, the active party waits for the other party to reply with SYN+acknowledgement (ACK) and finally, sends ACK back to the other party to acknowledge the SYN of the other party. This method of establishing a connection prevents incorrect connections. The flow control protocol used by TCP is a variable-sized sliding window protocol.

In an embodiment, after detection of the network environment by using the TCP link, in the case where the network environment is detected to be normal, authentication of the user ID and the local password corresponding to the user ID is triggered. In the case where a TCP link connection cannot be established, that is, a network connection cannot be established between the client and the server of the cloud desktop system, a network connection failure is prompted, and the client is exited.

In an embodiment, in the case where the network environment is detected to be normal, triggering the authentication of the user ID and the local password corresponding to the user ID includes: in the case where the network environment is an internal local area network, triggering the authentication of the user ID and the local password corresponding to the user ID; and in the case where the network environment is the Internet, logging in to a virtual private network (VPN) and then triggering the authentication of the user ID and the local password corresponding to the user ID. In the case where the network environment is normal, that is, a TCP link connection is established normally, if the network environment is an internal local area network, the user ID and password are entered, and the virtual desktop is confirmed and logged in to; if the network environment is the Internet, a virtual private network (VPN) is logged in to first. If login to the VPN fails, a failure to log in to the virtual desktop is fed back directly. If login to the VPN succeeds, the virtual desktop is logged in to subsequently.

A VPN can be understood as a virtual intranet private line. With a VPN, a private communication line can be established, through a special encrypted communication protocol, between two or more intranets connected to the Internet and located in different locations. The VPN function enables a private network to be established on a public network and enables encrypted communication. VPNs are widely used in enterprise networks. A VPN gateway enables remote access by encrypting a data packet and translating the destination address of the data packet. VPNs are classified in many manners and mainly by protocol. VPNs can be implemented in many manners such as server, hardware and software.

In an embodiment, linking to the cloud desktop system by using the command line parameter in the user information file includes replacing a session key in the command line parameter in the user information file with a passkey. The algorithm of the passkey is the same as the algorithm of the key of the cloud desktop system.

The cloud desktop system is linked by using the command line parameter. The original session key in the command line parameter is replaced with a passkey. The generation algorithm of the passkey is consistent with the generation algorithm of the key of the server, thereby achieving hotlink protection.

A session key is an encryption and decryption key generated randomly to ensure a secure communication session between a user and another computer or between two computers. A session key is sometimes a symmetric key because the same key is used for both encryption and decryption. A session key may be derived from a hash value by using the CryptDeriveKey function (this method is referred to as a session key derivation scheme). Throughout each session, this key is transmitted together with each message and encrypted using the recipient's public key. Since most of the security of a session key depends on the transience of the use time of the session key, the session key is changed frequently. Multiple messages may use different session keys.

When login is performed using the passkey, the server of the cloud desktop system sends a screen lock instruction to the virtual machine of the client and stops transmitting the automatic login message transparently to the desktop agent component VDagent. In this case, the user can use the virtual machine of the client only after manually entering the password, thereby increasing the security.

### Embodiment two

As shown in FIG. 2, an embodiment of the present application provides a client 20. The client 20 has at least two screens. In this embodiment, the client 20 includes at least a processor 21, a memory 22 and a data bus 23. The data bus 23 is configured to enable connection and communication between the processor 21 and the memory 22. As a computer-readable storage medium, the memory 22 can store at least one computer program. The at least one computer program can be read, compiled and executed by the processor 21 so that the corresponding process can be implemented. In this embodiment, as a computer-readable storage medium, the memory 22 stores an emergency management program for client connection. The program can be executed by the processor 21 so that the following operations of the emergency management method for client connection can be performed: in response to confirming that feedback about authentication information times out, starting emergency connection and authenticating a local password corresponding to a user ID; after the authentication of the local password corresponding to the user ID succeeds, querying a locally stored user information file for desktop list information according to the user ID; and displaying the desktop list information, and linking to a cloud desktop system by using a command line parameter in the user information file.

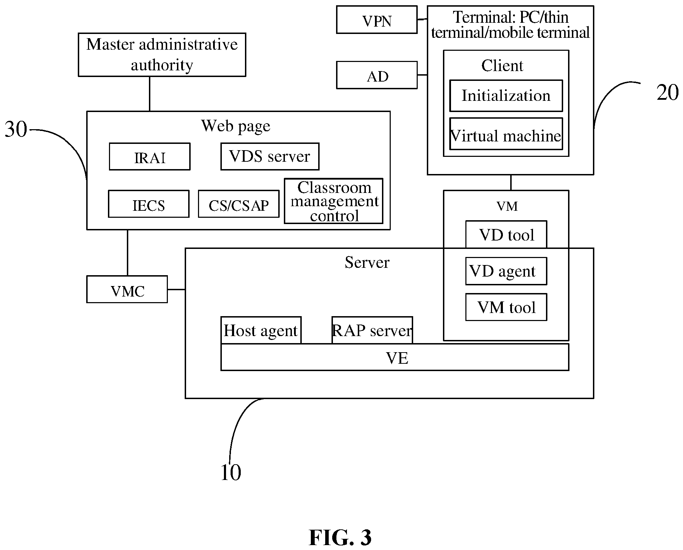

As shown in FIG. 3, a cloud desktop system of this embodiment of the present application includes a server host 10, a client 20, and a network web page interface 30 configured to provide a management node. The server 10 includes VisualEditor (VE), a host agent, a remote application platform server (RAP server) and a visual interface management tool server. The RAP is a visual interface management tool that can define an interface structure, dynamically generate analog data and verify the correctness of a real interface. Moreover, the RAP provides, based on interface definitions, a series of services including team management, project management, document version management, and mock plug-in. The RAP can fully visually define such items as project-related information and a request response of an interface, incurring low learning costs. The RAP also provides a back-end developer with the interface authentication function and provides a front-end developer with a tool for data mock.

In an embodiment, the client 20 is integrated in a terminal such as a PC, a thin terminal or a mobile terminal, includes a desktop agent component VDagent configured to send different instructions to an analog windows operating system.

The initialization client iEntry is configured to enable a user to acquire a desktop list through an initialization module and then log in.

The desktop virtual machine VDI Client is configured to display virtual desktop list information and provide an operation interface for a user.

In an embodiment, the web page interface 30 is a management and control node of the cloud desktop system and is configured to manage and control the life cycle of the desktop virtual machine. The web page interface 30 includes a system authentication module common store management service (CS)/common store management service application platform (CSAP), a network management control, a classroom management control Classroom, electromechanical integrated simulation control IRAI, and a desktop virtualization management virtual desktop service server (VDS server). The CS/CSAP is configured to authenticate a message to identify validity of a user. The location of the system authentication module is the location of the management node.

The network management control integrated Ethernet chip (IECS) is configured to enable network connection management and Ethernet connection management.

The classroom management control Classroom is configured to manage and control teaching resources and teaching tools provided by the cloud desktop system.

The electromechanical integrated simulation control IRAI is configured to perform simulation having physical attributes in a 3-dimensional (3D) environment. A simulated object may be called from a library and then constructed or may be a 3D model established through computer-aided design (CAD) software and imported directly. The supported 3D software includes Solidworks, Inventor, Catia and Solid Edge. The mainstream 3D file formats include 3DXML, 3DS and OBJ. A user may freely define actions for the simulated object and configure input/output (I/O) ports. The control terminal may choose to perform programming control in VituralUniversePro. Alternatively, the control terminal may perform control by using Automgen as a controller. Meanwhile, an external programmable logic controller (PLC) is supported. PLCs of various brands can perform communication. Additionally, the control terminal may perform control by using a single-chip microcomputer. Also, a man-machine interaction interface, and diagram generation of electric engineering and electronics and pneumatic/hydraulic are included.

The desktop virtualization management virtual desktop service server (VDS server) is configured to provide functions such as user authentication management, fine-grained policy control, desktop/cloud terminal unified monitoring and management, ensuring a more secure and reliable interactive cloud desktop.

The cloud desktop system further includes a virtual machine configuration (VMC) computing control node and a virtual machine (VM). The VMC computing control node is configured to virtualize resources such as network, storage, memory and CPU.

The VM is located at the location of a computing node. The VM includes a virtual desktop tool VDtool, a virtual desktop agent VDagent and a desktop virtual machine tool VMtool and is configured to send different instructions to an analog windows operating system.

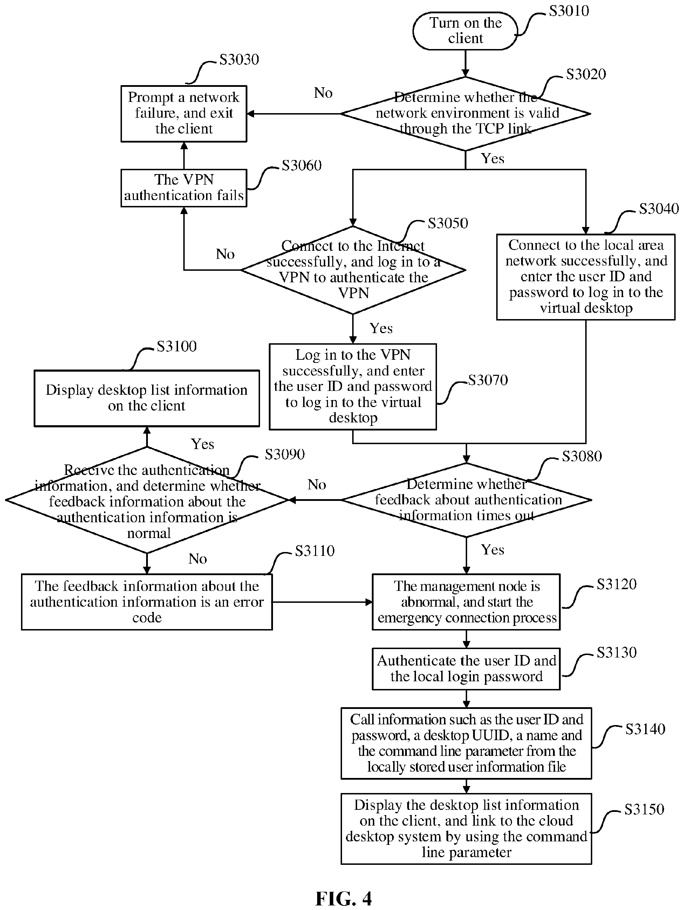

As shown in FIG. 4, the operation process of the client 20 is described below.

In S3010, the client, such as a PC, a thin terminal or a mobile terminal, is turned on.

In S3020, network environment window is set and it is determined whether the network is faulty through the TCP link.

In S3030, if the network is faulty, a network failure is prompted, and the client is exited.

In S3040, in the case where the network environment is an internal local area network, the local area network is connected successfully, and the user enters the user ID and password to log in to the virtual desktop.

In S3050, in the case where the network environment is the external Internet, the Internet is connected successfully, and first, a VPN is logged into to authenticate the VPN.

In S3060, the VPN authentication fails. If login to the VPN fails, feeding back a failure to log in to the virtual desktop directly, a network failure is prompted, and the client is exited.

In S3070, login to the VPN succeeds, and the user ID and password are entered for login to the virtual desktop.

In S3080, it is determined whether feedback about authentication information times out, that is, whether the authentication module CS provides feedback information within the preset time; if the authentication module CS provides no feedback information within the preset time, S3120 is performed.

In S3090, the authentication information is received, and it is determined whether feedback information about the authentication information is normal.

In S3100, desktop list information is displayed on the client.

In S3110, the feedback information about the authentication information is an error code. The authentication module CS responds but returns an error code such as an unavailable virtual state, a link failure, an authentication failure or a login failure.

In S3120, it is determined that the authentication is abnormal and the management node is down (unavailable), and the emergency connection process is started.

In S3130, the user ID and the local login password are authenticated.

In S3140, information such as the user ID, the local password, a desktop UUID, a name and the command line parameter recorded in the user.dat on the client is called from the locally stored user information file.

In S3150, the desktop list information is displayed on the client, and the cloud desktop system is linked by using the command line parameter.

### Embodiment three

An embodiment of the present application provides a computer-readable storage medium storing one or more programs. The one or more programs can be executed by one or more processors so that the preceding emergency management method for client connection as described in embodiment one can be performed.

It can be seen from the preceding technical solution that in this embodiment of the present application, the cloud desktop system is linked through authentication of the local user ID and password and through information such as the desktop list information and the command line parameter recorded in the user information file. In the case where the management node of the cloud desktop system is abnormal and the computing node is normal, the desktop virtual machine can be used normally so that the user does not need to care about the complexity of the cloud desktop system, the degree of customer satisfaction is improved, and the case where large-scale users cannot use the desktop virtual machine is avoided. Also, downtime is reduced, and the operation and maintenance quality of the application product is improved.

Function modules/units in all or part of the steps of the method, the system and the apparatus disclosed in the preceding description may be implemented as software, firmware, hardware or any appropriate combination thereof.

In the hardware implementation, the division of the function modules/units in the preceding description may not correspond to the division of physical components. For example, one physical component may have several functions, or one function or step may be executed jointly by several physical components. Some or all physical components may be implemented as software executed by a processor such as a central processing unit, a digital signal processor or a microcontroller, may be implemented as hardware or may be implemented as integrated circuits such as application-specific integrated circuits. Such software may be distributed over computer-readable media. The computer-readable media may include computer storage media (or non-transitory media) and communication media (or transitory media). The term computer storage media include volatile and nonvolatile as well as removable and non-removable media implemented in any method or technology for storage of information (such as computer-readable instructions, data structures, program modules or other data). The computer storage media include, but are not limited to, a random-access memory (RAM), a read-only memory (ROM), an electrically erasable programmable read-only memory (EEPROM), a flash memory or other memory technologies, a compact disc read-only memory (CD-ROM), a digital versatile disc (DVD) or other optical storages, a magnetic cassette, a magnetic tape, a magnetic disk or other magnetic storage devices, or any other medium for storing desired information that can be accessed by a computer. Additionally, the communication media generally include computer-readable instructions, data structures, program modules, or other data in carriers or in modulated data signals transported in other transport mechanisms and may include any information delivery medium.

## Claims

1. A method for management of an emergency in a connection of a client to a cloud desktop system, in a case where a management node fails, comprising:
in response to confirming that feedback about authentication information times out, starting (S1010) emergency connection and authenticating a local password corresponding to a user identification, ID; **characterized in that** the method further comprising:
after the authentication of the local password corresponding to the user ID succeeds, querying (S1020) a locally stored user information file for desktop list information according to the user ID; and
displaying (S1030) the desktop list information, and linking to a cloud desktop system corresponding to the desktop list information by using a command line parameter in the user information file; wherein
after querying the locally stored user information file for the desktop list information according to the user ID, the method further comprises: in a case where multiple pieces of desktop list information are detected in the user information file, prompting to select one piece of desktop list information among the multiple pieces of desktop list information; and accordingly, the displaying (S1030) the desktop list information, and linking to a cloud desktop system corresponding to the desktop list information by using a command line parameter in the user information file comprises: displaying the one piece of desktop list information, and linking to a cloud desktop system corresponding to the one piece of desktop list information by using a command line parameter in the user information file, wherein the command line parameter corresponds to the one piece of desktop list information; or
after querying the locally stored user information file for the desktop list information according to the user ID, in a case where one piece of desktop list information is detected in the user information file, the displaying (S1030) the desktop list information, and linking to a cloud desktop system corresponding to the desktop list information by using a command line parameter in the user information file comprises: displaying the one piece of desktop list information, and linking to a cloud desktop system corresponding to the one piece of desktop list information by using a command line parameter in the user information file, wherein the command line parameter corresponds to the one piece of desktop list information.

2. The method of claim 1, before confirming that the feedback about the authentication information times out, further comprising:
starting a client, setting a network environment, and detecting the network environment by using a Transmission Control Protocol, TCP, link.

3. The method of claim 2, after detecting the network environment by using the TCP link, further comprising: in a case where the network environment is detected to be normal, triggering authentication of the user ID and the local password corresponding to the user ID.

4. The method of claim 3, wherein in the case where the network environment is detected to be normal, triggering the authentication of the user ID and the local password corresponding to the user ID comprises: in a case where the network environment is an internal local area network, triggering the authentication of the user ID and the local password corresponding to the user ID; in a case where the network environment is the Internet, logging in to a virtual private network, VPN, and then triggering the authentication of the user ID and the local password corresponding to the user ID.

5. The method of any one of claims 1 to 4, wherein the timeout of the feedback about the authentication information comprises the following:
no feedback about the authentication information is provided within a preset period; or
feedback information about the authentication information is a login failure, an unavailable virtual state or a failure to link to the cloud desktop system.

6. The method of any one of claims 1 to 5, wherein the user information file contains the user ID, the local password, a cloud desktop universally unique identifier, a name and the command line parameter.

7. The method of any one of claims 1 to 6, wherein linking to the cloud desktop system by using the command line parameter in the user information file comprises replacing a session key in the command line parameter in the user information file with a passkey, wherein an algorithm of the passkey is the same as an algorithm of a key of the cloud desktop system.

8. A client, the client being configured to provide a user interface of a cloud desktop system and comprising a processor, a memory and a data bus, wherein
the data bus is configured to enable connection and communication between the processor and the memory; and
the processor is configured to execute an emergency management program for client connection to the cloud desktop system, in a case where a management node fails; wherein the emergency management program is stored in the memory to perform the following operations:
in response to confirming that feedback about authentication information times out, starting (S1010) emergency connection and authenticating a local password corresponding to a user identification, ID;
after the authentication of the local password corresponding to the user ID succeeds, querying (S1020) a locally stored user information file for desktop list information according to the user ID; and
displaying (S1030) the desktop list information, and linking to a cloud desktop system corresponding to the desktop list information by using a command line parameter in the user information file; whereinafter querying the locally stored user information file for the desktop list information according to the user ID, the processor is configured to perform the following steps: in a case where multiple pieces of desktop list information are detected in the user information file, prompting to select one piece of desktop list information among the multiple pieces of desktop list information; and accordingly, the displaying (S1030) the desktop list information, and linking to a cloud desktop system corresponding to the desktop list information by using a command line parameter in the user information file comprises: displaying the one piece of desktop list information, and linking to a cloud desktop system corresponding to the one piece of desktop list information by using a command line parameter in the user information file, wherein the command line parameter corresponds to the one piece of desktop list information; or
after querying the locally stored user information file for the desktop list information according to the user ID, in a case where one piece of desktop list information is detected in the user information file, the displaying (S1030) the desktop list information, and linking to a cloud desktop system corresponding to the desktop list information by using a command line parameter in the user information file comprises: displaying the one piece of desktop list information, and linking to a cloud desktop system corresponding to the one piece of desktop list information by using a command line parameter in the user information file, wherein the command line parameter corresponds to the one piece of desktop list information.

9. A computer-readable storage medium, storing at least one program which is executable by at least one processor (21) to perform the emergency management method for client connection according to any one of claims 1 to 7.

## Patentansprüche

1. Notfallverwaltungsverfahren bei einer Verbindung eines Clients mit einem Cloud-Desktop-System in einem Fall, in dem ein Verwaltungsknoten versagt, umfassend:
Starten (S1010) einer Notfallverbindung und Authentifizieren eines lokalen Passworts, das einer Benutzeridentifikation, ID, entspricht, als Reaktion auf das Bestätigen eines Zeitüberschreitens von Feedback über Authentifizierungsinformationen; **dadurch gekennzeichnet, dass** das Verfahren ferner Folgendes umfasst:
Abfragen (S1020) einer lokal gespeicherten Benutzerinformationsdatei nach Desktop-Listeninformationen gemäß der Benutzer-ID nach erfolgreicher Authentifizierung des der Benutzer-ID entsprechenden lokalen Passworts; und
Anzeigen (S1030) der Desktop-Listeninformationen und Verlinken mit einem den Desktop-Listeninformationen entsprechenden Cloud-Desktop-System unter Verwendung eines Befehlszeilenparameters in der Benutzerinformationsdatei; wobei
das Verfahren nach Abfragen der lokal gespeicherten Benutzerinformationsdatei nach den Desktop-Listeninformationen gemäß der Benutzer-ID ferner umfasst: in einem Fall, in dem mehrere Desktop-Listeninformationsstücke in der Benutzerinformationsdatei erkannt werden, Auffordern, ein Desktop-Listeninformationsstück aus den mehreren Desktop-Listeninformationsstücken auszuwählen; und demgemäß umfasst das Anzeigen (S1030) der Desktop-Listeninformationen und Verlinken mit einem den Desktop-Listeninformationen entsprechenden Cloud-Desktop-System unter Verwendung eines Befehlszeilenparameters in der Benutzerinformationsdatei: Anzeigen des einen Desktop-Listeninformationsstücks und Verlinken mit einem dem einen Desktop-Listeninformationsstück entsprechenden Cloud-Desktop-System unter Verwendung eines Befehlszeilenparameters in der Benutzerinformationsdatei, wobei der Befehlszeilenparameter dem einen Desktop-Listeninformationsstück entspricht; oder
nach Abfragen der lokal gespeicherten Benutzerinformationsdatei nach den Desktop-Listeninformationen gemäß der Benutzer-ID in einem Fall, in dem ein Desktop-Listeninformationsstück in der Benutzerinformationsdatei erkannt wird, umfasst das Anzeigen (S1030) der Desktop-Listeninformationen und Verlinken mit einem den Desktop-Listeninformationen entsprechenden Cloud-Desktop-System unter Verwendung eines Befehlszeilenparameters in der Benutzerinformationsdatei: Anzeigen des einen Desktop-Listeninformationsstücks und Verlinken mit einem dem einen Desktop-Listeninformationsstück entsprechenden Cloud-Desktop-System unter Verwendung eines Befehlszeilenparameters in der Benutzerinformationsdatei, wobei der Befehlszeilenparameter dem einen Desktop-Listeninformationsstück entspricht.

2. Verfahren nach Anspruch 1, ferner umfassend vor Bestätigen des Zeitüberschreitens von Feedback über die Authentifizierungsinformation:
Starten eines Clients, Einrichten einer Netzwerkumgebung und Erkennen der Netzwerkumgebung unter Verwendung eines TCP(Transmission Control Protocol)-Links.

3. Verfahren nach Anspruch 2, ferner umfassend nach Erkennen der Netzwerkumgebung unter Verwendung des TCP-Links: in einem Fall, in dem die Netzwerkumgebung als normal erkannt wird, Auslösen einer Authentifizierung der Benutzer-ID und des der Benutzer-ID entsprechenden lokalen Passworts.

4. Verfahren nach Anspruch 3, wobei in dem Fall, in dem die Netzwerkumgebung als normal erkannt wird, Auslösen der Authentifizierung der Benutzer-ID und des der Benutzer-ID entsprechenden lokalen Passworts umfasst: in einem Fall, in dem die Netzwerkumgebung ein internes lokales Netzwerk ist, Auslösen der Authentifizierung der Benutzer-ID und des der Benutzer-ID entsprechenden lokalen Passworts; in einem Fall, in dem die Netzwerkumgebung das Internet ist, Anmelden bei einem virtuellen privaten Netzwerk, VPN, und anschließendes Auslösen der Authentifizierung der Benutzer-ID und des der Benutzer-ID entsprechenden lokalen Passworts.

5. Verfahren nach einem der Ansprüche 1 bis 4, wobei die Zeitüberschreitung des Feedbacks über die Authentifizierungsinformation Folgendes umfasst:
innerhalb eines vorgegebenen Zeitraums wird kein Feedback über die Authentifizierungsinformation bereitgestellt; oder
Feedback-Informationen über die Authentifizierungsinformationen sind ein Anmeldefehler, ein nicht verfügbarer virtueller Zustand oder ein Fehler beim Verlinken mit dem Cloud-Desktop-System.

6. Verfahren nach einem der Ansprüche 1 bis 5, wobei die Benutzerinformationsdatei die Benutzer-ID, das lokale Kennwort, eine universell eindeutige Kennung des Cloud-Desktops, einen Namen und den Befehlszeilenparameter enthält.

7. Verfahren nach einem der Ansprüche 1 bis 6, wobei Verlinken mit dem Cloud-Desktop-System unter Verwendung des Befehlszeilenparameters in der Benutzerinformationsdatei Ersetzen eines Sitzungsschlüssels in dem Befehlszeilenparameter in der Benutzerinformationsdatei durch einen Passkey umfasst, wobei ein Algorithmus des Passkeys der gleiche ist wie ein Algorithmus eines Schlüssels des Cloud-Desktop-Systems.

8. Client, wobei der Client zum Bereitstellen einer Benutzeroberfläche eines Cloud-Desktop-Systems konfiguriert ist, und umfassend einen Prozessor, einen Speicher und einen Datenbus, wobei
der Datenbus zum Ermöglichen einer Verbindung und Kommunikation zwischen dem Prozessor und dem Speicher konfiguriert ist; und
der Prozessor zum Ausführen eines Notfallverwaltungsprogramms für eine Client-Verbindung zu dem Cloud-Desktop-System in einem Fall konfiguriert ist, in dem ein Verwaltungsknoten versagt; wobei das Notfallverwaltungsprogramm in dem Speicher zum Durchführen der folgenden Vorgänge gespeichert ist:
Starten (S1010) einer Notfallverbindung und Authentifizieren eines lokalen Passworts, das einer Benutzeridentifikation, ID, entspricht, als Reaktion auf das Bestätigen eines Zeitüberschreitens von Feedback über Authentifizierungsinformationen;
Abfragen (S1020) einer lokal gespeicherten Benutzerinformationsdatei nach Desktop-Listeninformationen gemäß der Benutzer-ID nach erfolgreicher Authentifizierung des der Benutzer-ID entsprechenden lokalen Passworts; und
Anzeigen (S1030) der Desktop-Listeninformationen und Verlinken mit einem den Desktop-Listeninformationen entsprechenden Cloud-Desktop-System unter Verwendung eines Befehlszeilenparameters in der Benutzerinformationsdatei;
wobei der Prozessor nach Abfragen der lokal gespeicherten Benutzerinformationsdatei nach den Desktop-Listeninformationen gemäß der Benutzer-ID zum Durchführen der folgenden Schritte konfiguriert ist: in einem Fall, in dem mehrere Desktop-Listeninformationsstücke in der Benutzerinformationsdatei erkannt werden, Auffordern, ein Desktop-Listeninformationsstück aus den mehreren Desktop-Listeninformationsstücken auszuwählen; und demgemäß umfasst das Anzeigen (S1030) der Desktop-Listeninformationen und Verlinken mit einem den Desktop-Listeninformationen entsprechenden Cloud-Desktop-System unter Verwendung eines Befehlszeilenparameters in der Benutzerinformationsdatei: Anzeigen des einen Desktop-Listeninformationsstücks und Verlinken mit einem dem einen Desktop-Listeninformationsstück entsprechenden Cloud-Desktop-System unter Verwendung eines Befehlszeilenparameters in der Benutzerinformationsdatei, wobei der Befehlszeilenparameter dem einen Desktop-Listeninformationsstück entspricht; oder
nach Abfragen der lokal gespeicherten Benutzerinformationsdatei nach den Desktop-Listeninformationen gemäß der Benutzer-ID in einem Fall, in dem ein Desktop-Listeninformationsstück in der Benutzerinformationsdatei erkannt wird, umfasst das Anzeigen (S1030) der Desktop-Listeninformationen und Verlinken mit einem den Desktop-Listeninformationen entsprechenden Cloud-Desktop-System unter Verwendung eines Befehlszeilenparameters in der Benutzerinformationsdatei: Anzeigen des einen Desktop-Listeninformationsstücks und Verlinken mit einem dem einen Desktop-Listeninformationsstück entsprechenden Cloud-Desktop-System unter Verwendung eines Befehlszeilenparameters in der Benutzerinformationsdatei, wobei der Befehlszeilenparameter dem einen Desktop-Listeninformationsstück entspricht.

9. Computerlesbares Speichermedium, das mindestens ein Programm speichert, das von mindestens einem Prozessor (21) zum Durchführen des Notfallverwaltungsverfahrens für eine Client-Verbindung nach einem der Ansprüche 1 bis 7 ausführbar ist.

## Revendications

1. Procédé de gestion d'une urgence dans une connexion d'un client à un système de bureau infonuagique, dans le cas où un noeud de gestion fait défaut, comprenant :
en réponse à la confirmation qu'une rétroaction concernant des informations d'authentification expire, le démarrage (S1010) d'une connexion d'urgence et l'authentification d'un mot de passe local correspondant à une identification d'utilisateur, ID ; **caractérisé en ce que** le procédé comprend en outre :
après que l'authentification du mot de passe local correspondent à l'ID utilisateur a réussi, l'interrogation (S1020) d'un fichier d'informations utilisateur stocké localement pour obtenir des informations de liste de bureau selon l'ID utilisateur ; et
l'affichage (S1030) des informations de liste de bureau, et la liaison à un système de bureau infonuagique correspondant aux informations de liste de bureau à l'aide d'un paramètre de ligne de commande dans le fichier d'informations utilisateur ; dans lequel
après l'interrogation du fichier d'informations utilisateur stocké localement pour les informations de liste de bureau selon l'ID utilisateur, le procédé comprend en outre : dans un cas où de multiples éléments d'informations de liste de bureau sont détectés dans le fichier d'informations utilisateur, une invite à sélectionner un élément d'informations de liste de bureau parmi les multiples éléments d'informations de liste de bureau ; et en conséquence, l'affichage (S1030) des informations de liste de bureau, et la liaison à un système de bureau infonuagique correspondant aux informations de liste de bureau à l'aide d'un paramètre de ligne de commande dans le fichier d'informations utilisateur comprend : l'affichage de l'élément d'informations de liste de bureau, et la liaison à un système de bureau infonuagique correspondant à l'élément d'informations de liste de bureau à l'aide d'un paramètre de ligne de commande dans le fichier d'informations utilisateur, dans lequel le paramètre de ligne de commande correspond à l'élément d'information de liste de bureau ; ou

2. Procédé selon la revendication 1, avant de confirmer que la rétroaction concernant les informations d'authentification n'expire, comprenant en outre :
le démarrage d'un client, la définition d'un environnement réseau et la détection de l'environnement réseau à l'aide d'une liaison de protocole de commande de transmission, TCP.

3. Procédé selon la revendication 2, après la détection de l'environnement réseau à l'aide de la liaison TCP, comprenant en outre : dans un cas où l'environnement réseau est détecté comme étant normal, le déclenchement de l'authentification de l'ID utilisateur et du mot de passe local correspondent à l'ID utilisateur.

4. Procédé selon la revendication 3, dans lequel dans le cas où l'environnement réseau est détecté comme étant normal, le déclenchement de l'authentification de l'ID utilisateur et du mot de passe local correspondant à l'ID utilisateur comprend :
dans le cas où l'environnement réseau est un réseau local interne, le déclenchement de l'authentification de l'ID utilisateur et du mot de passe local correspondant à l'ID utilisateur ; dans un cas où l'environnement réseau est Internet, la connexion à un réseau privé virtuel, VPN, puis le déclenchement de l'authentification de l'ID utilisateur et du mot de passe local correspondant à l'ID utilisateur.

5. Procédé selon l'une quelconque des revendications 1 à 4, dans lequel l'expiration de la rétroaction concernant les informations d'authentification comprend ce qui suit :
aucune rétroaction concernant des informations d'authentification n'est fournie dans une période prédéfinie ; ou
des informations de rétroaction concernant les informations d'authentification sont un échec de connexion, un état virtuel indisponible ou une défaillance de liaison au système de bureau infonuagique.

6. Procédé selon l'une quelconque des revendications 1 à 5, dans lequel le fichier d'informations utilisateur contient l'ID utilisateur, le mot de passe local, un identifiant universel unique de bureau infonuagique, un nom et le paramètre de ligne de commande.

7. Procédé selon l'une quelconque des revendications 1 à 6, dans lequel la liaison au système de bureau infonuagique à l'aide du paramètre de ligne de commande dans le fichier d'informations utilisateur comprend le remplacement d'une clé de session dans le paramètre de ligne de commande dans le fichier d'informations utilisateur par une clé de sécurité, dans lequel un algorithme de la clé de sécurité est le même qu'un algorithme d'une clé du système de bureau infonuagique.

8. Client, le client étant configuré pour fournir une interface utilisateur d'un système de bureau infonuagique et comprenant un processeur, une mémoire et un bus de données, dans lequel
le bus de données est configuré pour permettre la connexion et la communication entre le processeur et la mémoire ; et
le processeur est configuré pour exécuter un programme de gestion d'urgence pour une connexion de client au système de bureau infonuagique, dans un cas où un noeud de gestion fait défaut ; dans lequel le programme de gestion d'urgence est stocké dans la mémoire pour mettre en œuvre les opérations suivantes :
en réponse à la confirmation qu'une rétroaction concernant des informations d'authentification expire, le démarrage (S1010) d'une connexion d'urgence et l'authentification d'un mot de passe local correspondant à une identification d'utilisateur, ID ;
après que l'authentification du mot de passe local correspondent à l'ID utilisateur a réussi, l'interrogation (S1020) d'un fichier d'informations utilisateur stocké localement pour obtenir des informations de liste de bureau selon l'ID utilisateur ; et
l'affichage (S1030) des informations de liste de bureau, et la liaison à un système de bureau infonuagique correspondant aux informations de liste de bureau à l'aide d'un paramètre de ligne de commande dans le fichier d'informations utilisateur ;
dans lequel après l'interrogation du fichier d'informations utilisateur stocké localement pour les informations de liste de bureau selon l'ID utilisateur, le processeur est configuré pour mettre en œuvre les étapes suivantes : dans un cas où de multiples éléments d'informations de liste de bureau sont détectés dans le fichier d'informations utilisateur, une invite à sélectionner un élément d'informations de liste de bureau parmi les multiples éléments d'informations de liste de bureau ; et en conséquence, l'affichage (S1030) des informations de liste de bureau, et la liaison à un système de bureau infonuagique correspondant aux informations de liste de bureau à l'aide d'un paramètre de ligne de commande dans le fichier d'informations utilisateur comprend : l'affichage de l'élément d'informations de liste de bureau, et la liaison à un système de bureau infonuagique correspondant à l'élément d'informations de liste de bureau à l'aide d'un paramètre de ligne de commande dans le fichier d'informations utilisateur, dans lequel le paramètre de ligne de commande correspond à l'élément d'informations de liste de bureau ; ou
après l'interrogation du fichier d'informations utilisateur stocké localement pour les informations de liste de bureau selon l'ID utilisateur, dans un cas où un élément d'informations de liste de bureau est détecté dans le fichier d'informations utilisateur, l'affichage (S1030) des informations de liste de bureau, et la liaison à un système de bureau infonuagique correspondant aux informations de liste de bureau à l'aide d'un paramètre de ligne de commande dans le fichier d'informations utilisateur comprend : l'affichage de l'élément d'informations de liste de bureau, et la liaison à un système de bureau infonuagique correspondant à l'élément d'informations de liste de bureau à l'aide d'un paramètre de ligne de commande dans le fichier d'informations utilisateur, dans lequel le paramètre de ligne de commande correspond à l'élément d'informations de liste de bureau.

9. Support de stockage lisible par ordinateur, stockant au moins un programme qui est exécutable par au moins un processeur (21) pour mettre en œuvre le procédé de gestion d'urgence pour connexion de client selon l'une quelconque des revendications 1 à 7.
